# EUROPÄISCHE PATENTSCHRIFT

(11) **EP 2 055 214 B1**
(45) Veröffentlichungstag und Bekanntmachung des Hinweises auf die Patenterteilung: **11.08.2010**
(21) Anmeldenummer: 07119488.0
(22) Anmeldetag: 29.10.2007
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 06.05.2009
(73) Patentinhaber: Schaerer AG, 4528 Zuchwil (CH)
(72) Erfinder: Wüthrich, Christoph, 3053, Wiggiswil (CH)
(74) Vertreter: Scheuzger, Beat Otto

(56) Entgegenhaltungen:
- EP-A- 0 528 758
- EP-A- 0 538 191

## Beschreibung

Die vorliegende Erfindung bezieht sich auf eine Brüheinrichtung für eine Kaffeemaschine, umfassend einen Brühzylinder mit einer zylindrischen Bohrung und einen oberen Kolben und einen unteren Kolben, durch welche der Brühzylinder zur Bildung einer Brühkammer abschliessbar ist, wobei der Brühzylinder und die Kolben relativ zueinander verschiebbar in einem Rahmen gehalten sind und über eine Antriebseinrichtung antreibbar sind, welche Antriebseinrichtung eine mit einem trapezförmigen Gewinde versehene Spindel, deren beidseitigen Enden im Rahmen drehbar gelagert sind, und einen Motor umfasst, in welches trapezförmige Gewinde der Spindel einseitig ein Gewindeteil eingreift, welcher an einem am unteren Kolben angebrachten Mitnahmeteil angeordnet ist und entlang im Rahmen angebrachten Linearführungen verschiebbar ist, eine Kaffeepulverzuführeinrichtung zum Befüllen der Brühkammer mit Kaffeepulver, und ein Abstreifelement zum Abstreifen des nach dem Brühvorgang aus der Brühkammer durch den unteren Kolben ausgestossenen Kaffeepulverkuchens in einen Auffangbehälter.

Derartige Brüheinrichtungen sind in vielfältiger Weise bekannt und werden sowohl in Haushaltskaffeemaschinen wie auch in Restaurationskaffeemaschinen eingesetzt. Zum Bezug eines Kaffees wird die erforderliche Menge von üblicherweise frisch gemahlenem Kaffeepulver, abhängig davon, welche Art von Kaffee bezogen wird, wie beispielsweise normaler Kaffee, Espressokaffee, Ristrettokaffee usw., in die Brühkammer eingefüllt. Die Brühkammer wird danach verschlossen, wonach heisses Wasser mit dem gewünschten Druck durch die Brühkammer geleitet wird, wobei Kaffee gebrüht wird. Der so frisch gebrühte Kaffee gelangt dann über einen Auslass in das bereit gestellte Gefäss. Die Brühkammer wird danach geöffnet, der darin befindliche Kaffeepulverrest wird aus der Brühkammer ausgeworfen und gelangt in einen Behälter.

Eine derartige Brüheinrichtung ist beispielsweise aus der EPA 0528758 und der EP-A-0538191 bekannt. Zum Öffnen und Schliessen der Brühkammer ist eine Spindel angeordnet, die über einen Antriebsmotor drehbar antreibbar ist. Über diese Spindel, die mit einem trapezförmigen Gewinde ausgestattet ist, wird der Brühzylinder entlang dieser Spindel verschoben. Der Brühzylinder ist hierzu mit einem Mitnahmeteil ausgestattet, der mit einem Gewindeteil versehen ist, welcher mit einem dem trapezförmigen Gewinde der Spindel korrespondierenden Gewinde versehen ist und in das trapezförmige Gewinde der Spindel eingreift, und welcher die Spindel um einen bestimmten Bereich umschlingt.

Die Spindel ist an ihren beidseitigen Enden mit einem Lagerzapfen versehen, welche in Lagerringen gleitend drehbar gehalten sind, die im Rahmen der Brüheinrichtung befestigt sind. Die Spindel sowie der Rahmen und die weiteren Bestandteile der Brüheinrichtung bestehen aus einem abriebfesten Kunststoff, insbesondere POM (Polyoxymethylen), und werden im Spritzgussverfahren hergestellt. Durch dieses Spritzgussverfahren können die einzelnen Teile relativ kostengünstig hergestellt werden. Hierbei ist der Gewindeteil in den Brühzylinder integriert, wodurch dieses Element spritzgiesstechnisch einfach hergestellt werden kann. Um dies ebenfalls erreichen zu können, ist der Gewindeteil so ausgestaltet, dass er die Spindel weniger als halbseitig umschliesst. Ebenfalls aus fertigungstechnischen Gründen ist das Gewinde an der Spindel und das korrespondierende Gewinde am Gewindeteil als trapezförmiges Gewinde ausgebildet. Die Gewindeflanken sind dementsprechend geneigt.

Während des Brühvorgangs eines Kaffees, wenn also die Brühkammer durch die beiden Kolben verschlossen ist, befindet sich der am unteren Kolben angebrachte Gewindeteil in einem mittleren Bereich der an ihren beidseitigen Enden gelagerten Spindel. Während des Brühvorgangs wird das Wasser mit einem Druck von etwa 8bar durch die Brühkammer gepresst, was bedeutet, dass auch auf den unteren Kolben eine relativ grosse Druckkraft wirkt, die über den Gewindeteil und die Spindel abgestützt wird. Durch die geneigten Gewindeflanken des trapezförmigen Gewindes entsteht auf die Spindel eine Kraftkomponente, die quer zu deren Achse wirkt, und die die Spindel vom Gewindeteil wegdrücken möchte. Die Spindel weist aufgrund der fertigungstechnischen Materialwahl eine gewisse Elastizität auf, sodass unter dem Einfluss dieser Kraftkomponente ein Durchbiegen der Spindel erfolgt. Ein Wegdrücken der Spindel aus dem Gewindeteil des Brühzylinders hat aufgrund des trapezförmigen Gewindes zur Folge, dass sich der Brühzylinder mit dem unteren Kolben bezüglich des fest stehenden oberen Kolbens absenken kann, wodurch die Brühkammer und die darin herrschenden Bedingungen verändert werden, was nicht erwünscht ist.

Die Aufgabe der vorliegenden Erfindung besteht somit darin, die Spindel derart im Rahmen der Brüheinrichtung zu halten, dass eine Ausbiegung der Spindel während des Brühvorgangs vermieden wird.

Erfindungsgemäss erfolgt die Lösung dieser Aufgabe dadurch, dass die Spindel auf der dem Gewindeteil gegenüber liegenden Bereich durch Abstützmittel abgestützt ist, welche am Rahmen befestigbar sind.

Durch das Anbringen dieser Abstützmittel am Rahmen der Brüheinrichtung wird vermieden, dass die Spindel ausgebogen wird, der Eingriff des trapezförmigen Gewindes in das korrespondierende Gewinde des am Brühzylinder angebrachten Gewindeteils ist somit insbesondere während des Brühvorgangs optimal, ein Wegdrücken des Brühzylinders mit dem unteren Kolben wird dadurch vermieden.

In vorteilhafter Weise sind die Abstützmittel aus einer Platte gebildet, welche beidseitig am Rahmen befestigt ist, und welche eine Abstützfläche aufweist, die dem trapezförmigen Gewinde der Spindel zugewandt ist. Dadurch wird ein sehr einfacher und kostengünstiger Aufbau der Abstützmittel erreicht.

In vorteilhafter Weise ist die Abstützfläche mit einer glatten zylinderflächigen Wölbung versehen, welche im Wesentlichen der Aussenfläche des trapezförmigen Gewindes der Spindel entspricht. Dadurch kann sich die Aussenfläche des trapezförmigen Gewindes der Spindel in optimaler Weise und ohne grosse Reibung zu Erzeugen auf dieser glatten zylinderflächigen Wölbung der Platte abstützen, die Flächenbelastung wird gering.

Die glatte zylindrische Wölbung der Abstützflächen umschliesst die Aussenfläche des trapezförmigen Gewindes der Spindel um etwa einen Viertel des Umfangs, wodurch optimale Abstützwirkung erreicht wird.

In vorteilhafter Weise sind die Abstützmittel aus einem widerstandsfähigen Kunststoff hergestellt, beispielsweise aus POM (Polyoxymethylen).

Eine weitere vorteilhafte Ausgestaltung der Erfindung besteht darin, dass die Abstützmittel derart am Rahmen befestigt sind, dass diese bei durch den oberen Kolben und den unteren Kolben geschlossenen Brühkammern gegenüber liegend zum Gewindeteil zu liegen kommt, die Abstützung ist somit während des Brühvorgangs für einen Kaffee optimal.

Eine Ausführungsform der vorliegenden Erfindung wird nachfolgend anhand der beiliegenden Zeichnung beispielhaft näher erläutert.

Es zeigt:
Fig. 1 eine Schnittdarstellung einer Brüheinrichtung einer Kaffeemaschine beim Einfüllvorgang des Kaffeepulvers in die Brühkammer;
Fig. 2 eine Schnittdarstellung der Brüheinrichtung mit geschlossener Brühkammer während des Brühvorgangs für einen Kaffee;
Fig. 3 eine Schnittdarstellung der Brüheinrichtung mit geöffneter Brühkammer und durch den unteren Kolben ausgestossenem Kaffeepulverkuchen;
Fig. 4 eine Schnittdarstellung der Brüheinrichtung mit beginnender Abstreifung des Kaffeepulverkuchens durch die Abstreifeinrichtung;
Fig. 5 eine Schnittdarstellung durch die Brüheinrichtung entlang Linie V-V gemäss Fig. 1;
Fig. 6 in vergrösserter schematischer Darstellung einen Teil des trapezförmigen Gewindes der Spindel; und
Fig. 7 in räumlicher Darstellung die Spindel, den Brühzylinder mit integriertem Gewindeteil und die Abstützmittel in auseinander gezogener Position.

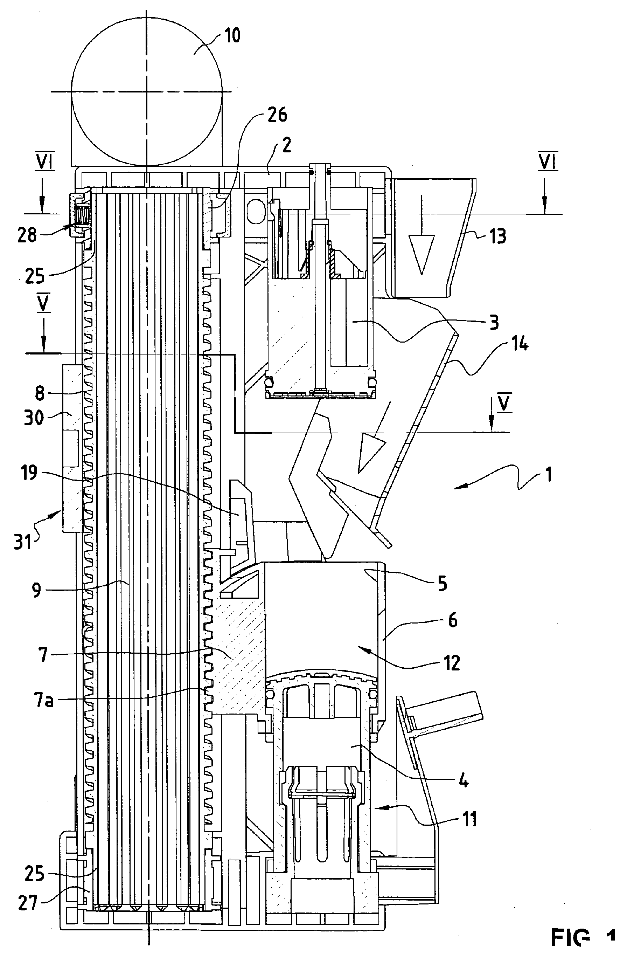

Wie aus den Figuren 1 bis 4 ersichtlich ist, umfasst die Brüheinrichtung 1 einen im Rahmen 2 ortsfest gehaltenen oberen Kolben 3. Dem oberen Kolben 3 axial gegenüber liegend ist ein unterer Kolben 4 angeordnet, der bezüglich des oberen Kolbens 3 axial verschiebbar ist. Dieser untere Kolben 4 ist in einer zylindrischen Bohrung 5 eines Brühzylinders 6 gehalten, welcher Brühzylinder 6 ebenfalls axial verschiebbar ist. Der Brühzylinder 6 ist mit einem Mitnahmeteil ausgestattet, an welchem ein Gewindeteil 7a angebracht ist, welcher Gewindeteil 7a mit einem trapezförmigen Gewinde 8 einer drehbar im Rahmen 2 gehaltenen Spindel 9 im Eingriff ist. Diese Spindel 9 weist an den beidseitigen Enden jeweils einen Lagerzapfen 25 auf, die in im Rahmen 2 angebrachten Lagerringen 26 und 27 gleitend drehbar gehalten sind. Im Lagerring 26 ist ein Lagerelement 28 eingesetzt, mit welchem das Spiel zwischen Lagerzapfen 25 und Lagerring 26 aufgehoben wird. Die Spindel 9 ist in bekannter Weise über einen Elektromotor 10 antreibbar, der ebenfalls am Rahmen angebracht ist.

Am Rahmen befestigt ist eine Platte 29, welche die Abstützmittel 30 bilden, mit welcher die Spindel 9 derart abgestützt wird, dass ein Wegbiegen dieser Spindel vom Gewindeteil 7a des Mitnahmeteils 7, der in den Brühzylinder 6 integriert ist, vermieden wird. Diese Abstützmittel 30 sind in einem mittleren Bereich zwischen der oberen und unteren Lagerung der Spindel am Rahmen befestigt, wie später noch beschrieben wird.

In Fig. 1 ist die Brüheinrichtung 1 in der Füllposition dargestellt. Dies bedeutet, dass sich der untere Kolben 4 in der untersten Position befindet, in welcher er durch die am Rahmen 2 angebrachte Klinkeinrichtung 11 gehalten wird. Diese Position hat der untere Kolben 4 dadurch erreicht, dass der Brühzylinder 6 über die Spindel 9 durch entsprechende Rotation ebenfalls in die unterste Position gebracht worden ist, in welche der untere Kolben 4 mitgenommen worden ist, bis er in die Klinkeinrichtung 11 eingeklinkt ist, danach ist der Brühzylinder 6 durch entsprechendes Verdrehen der Spindel 9 wieder hochgefahren worden, wie dies in Fig. 1 ersichtlich ist. Der untere Kolben verblieb hierbei in der untersten Position, der Brühzylinder 6 hat sich somit bezüglich des unteren Kolbens 4 angehoben, wodurch innerhalb des Brühzylinders 6 die nach unten durch den unteren Kolben 4 abgeschlossene Brühkammer 12 gebildet wird. In dieser Füllposition befindet sich das Abstreifelement 19 in seiner Ruheposition über dem Mitnahmeteil 7.

In die Brühkammer 12 wird nun das frisch gemahlene Kaffeepulver zugeführt. Dieses Kaffeepulver wird in bekannter Weise in einer Kaffeemühle, die nicht dargestellt ist und die ebenfalls in der entsprechenden Kaffeemaschine untergebracht ist, gemahlen, das Pulver gelangt über einen ersten Trichter 13 auf einen schwenkbaren Trichter 14, durch welchen das gemahlene Kaffeepulver in die Brühkammer 12 geleitet wird. Hierbei wird die zugeführte Kaffeepulvermenge in bekannter Weise dosiert, je nachdem welche Art von Kaffee bezogen werden soll.

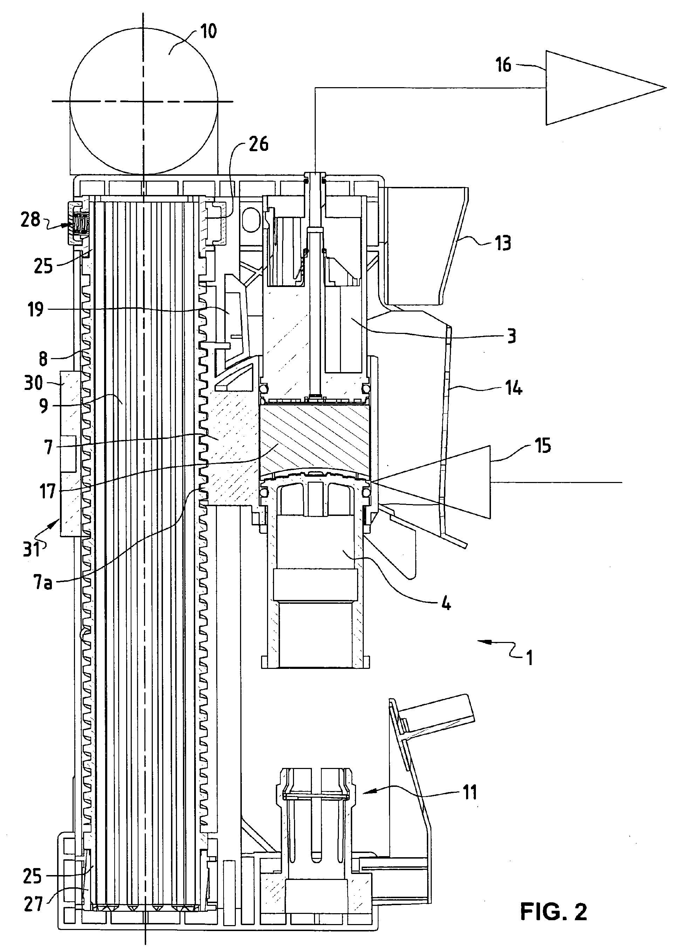

Nach dem Befüllen der Brühkammer 12 mit frisch gemahlenem Kaffeepulver wird die Spindel 9 über den Elektromotor 10 in Rotation versetzt, über den Gewindeteil 7a am Mitnahmeteil 7 wird der Brühzylinder 6 hochgefahren, wobei der untere Kolben 4 über entsprechende Mitnehmer mitgenommen wird. Der Brühzylinder 6 und der untere Kolben 4 werden solange hochgefahren, bis die Brühkammer 12 durch den oberen Kolben 3 verschlossen wird und das sich in der Brühkammer 12 befindende Kaffeepulver gepresst wird. In dieser Position des Brühzylinders 6, die in Fig. 2 dargestellt ist, ist die Brühstellung erreicht. In bekannter Weise kann nun von unten her in die Brühkammer 12 das heisse Wasser zugeführt werden, wie dies durch Pfeil 15 dargestellt ist, das heisse Wasser druchströmt die Brühkammer 12 und das sich darin befindende gemahlene Kaffeepulver und wird über einen Abflusskanal, der in bekannter Weise im oberen Kolben 3 angebracht ist, als gebrühter Kaffee abgeleitet, wie dies durch Pfeil 16 dargestellt ist, und gelangt in bekannter Weise über eine nicht dargestellte Leitung in einen Ausguss der Kaffeemaschine und von dort in das darunter bereit gestellte Gefäss. Zum Brühen des Kaffees wird das in der Brühkammer 12 sich befindende Kaffeepulver zwischen den beiden Kolben 3 und 4 derart komprimiert, dass dieses dem durchströmenden Brühwasser einen Widerstand entgegensetzt, sodass das Brühwasser mit einem Druck von etwa 8bar durch die Brühkammer gepresst werden muss. Das ausgebrühte Kaffeepulver verbleibt in der Brühkammer 12 und bildet einen Kaffeepulverkuchen, der sehr kompakt und feucht ist.

Wie aus Fig. 2 ersichtlich ist, wird der schwenkbare Trichter 14 beim Hochfahren des Brühzylinders 6 mit dem unteren Kolben 4 weggeschwenkt, hierbei ist dieser schwenkbare Trichter 14 mit einer nicht dargestellten Feder ausgestattet, welche den schwenkbaren Trichter 14 in die in Fig. 1 dargestellte Position zurückdrücken möchte.

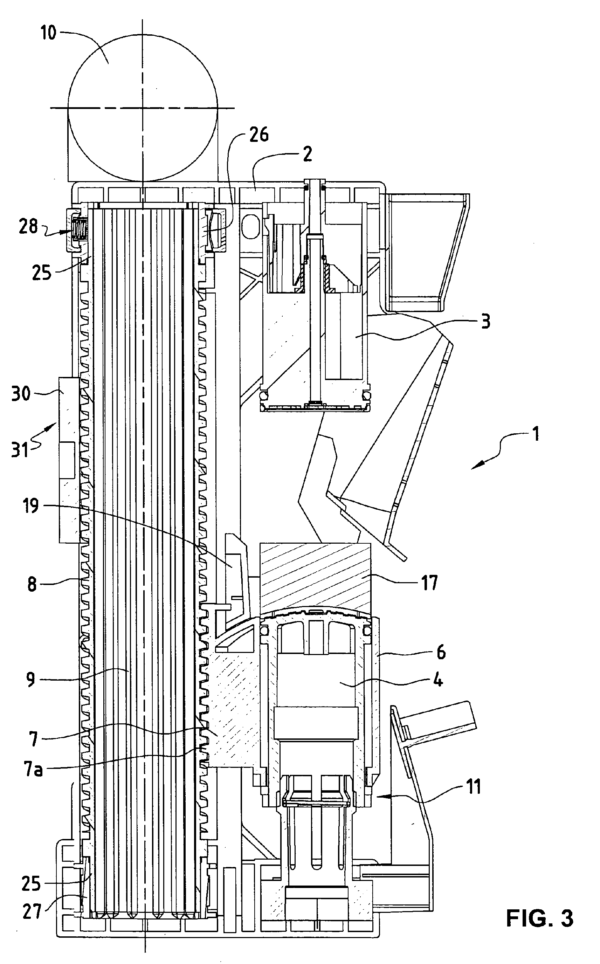

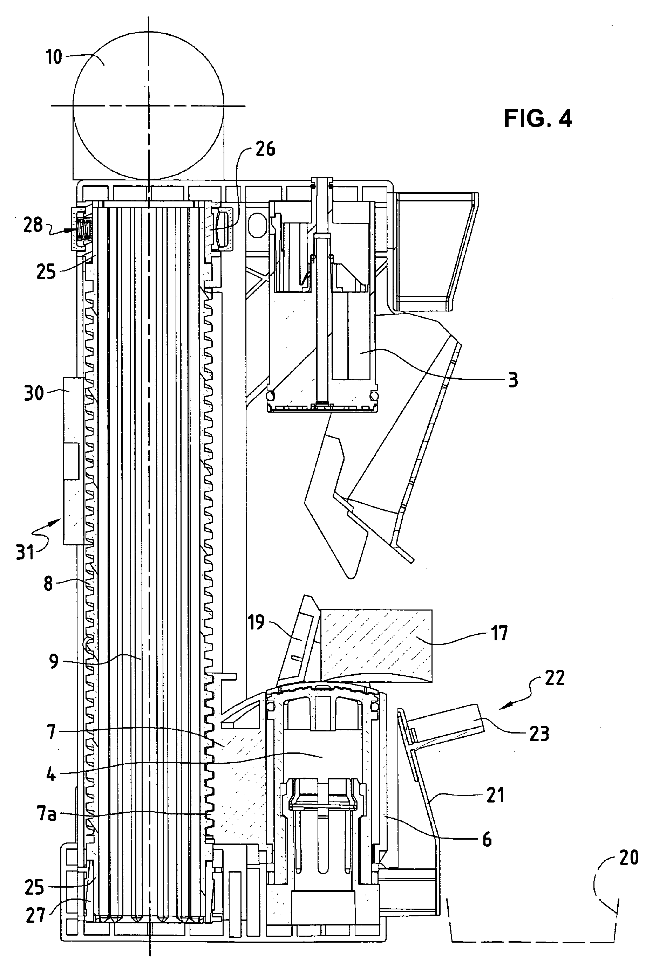

Nach der Durchführung des Brühvorgangs wird die Brühkammer 12 geöffnet, indem der Brühzylinder 6 und der untere Kolben 4 durch entsprechendes Verdrehen der Spindel 9 nach unten gefahren werden, wie dies in Fig. 3 dargestellt ist. Der untere Kolben 4 erreicht hierbei mit seinem unteren Ende die Klinkeinrichtung 11 und stützt sich darauf ab. Der Brühzylinder 6 wird weiter nach unten gefahren, der untere Kolben bleibt stehen, wodurch der Kaffeepulverkuchen 17 aus dem Brühzylinder 6 ausgestossen wird, wie dies in Fig. 3 ersichtlich ist. Wenn der Brühzylinder 6 mit seinem oberen Rand den oberen Rand des unteren Kolbens 4 erreicht hat, liegt der ausgestossene Kaffeepulver 17 auf dem unteren Kolben 4 auf, der untere Kolben 4 wird mit dem weiter nach unten verfahrbaren Brühzylinder 6 über entsprechende Anschläge mitgenommen und in die Klinkeinrichtung 11 eingefahren, wie dies in Fig. 4 dargestellt ist. Wenn der Brühzylinder 6 und der untere Kolben 4 in den Bereich der unteren Position gelangen, wird das Abstreifelement 19, welches in bekannter Weise am Brühzylinder 6 angelenkt ist, über eine am Rahmen 2 angebrachte, bekannte nicht dargestellte Kulisse mechanisch betätigt. Hierdurch bewegt sich das Abstreifelement 19 quer über den unteren Kolben 4, der Kaffeepulverkuchen 17 wird, wie aus Fig. 4 ersichtlich, vom unteren Kolben und dem Brühzylinder 6 abgestreift.

Der auszuwerfende Kaffeepulverkuchen 17 gelangt hierbei über eine Rutsche 21, die am Rahmen 2 angebracht ist, in einen nur schematisch dargestellten, in der Kaffeemaschine untergebrachten Behälter 20. An der Rutsche 21 ist ein Teilelement 22 angebracht, das in diesem Ausführungsbeispiel als Klinge 23 ausgebildet ist, mittels welcher der über die Rutsche 21 in den Behälter 20 gelangende Kaffeepulverkuchen 17 in kleinere Stücke zerschnitten wird.

Nach dem Auswerfen des Kaffeepulverkuchens 17 kann der Brühzylinder 6 durch entsprechendes Rotieren der Spindel 9 wieder in die Füllstellung gebracht werden, wie dies in Fig. 1 dargestellt ist, die Brüheinrichtung ist bereit zum Brühen eines weiteren Kaffees.

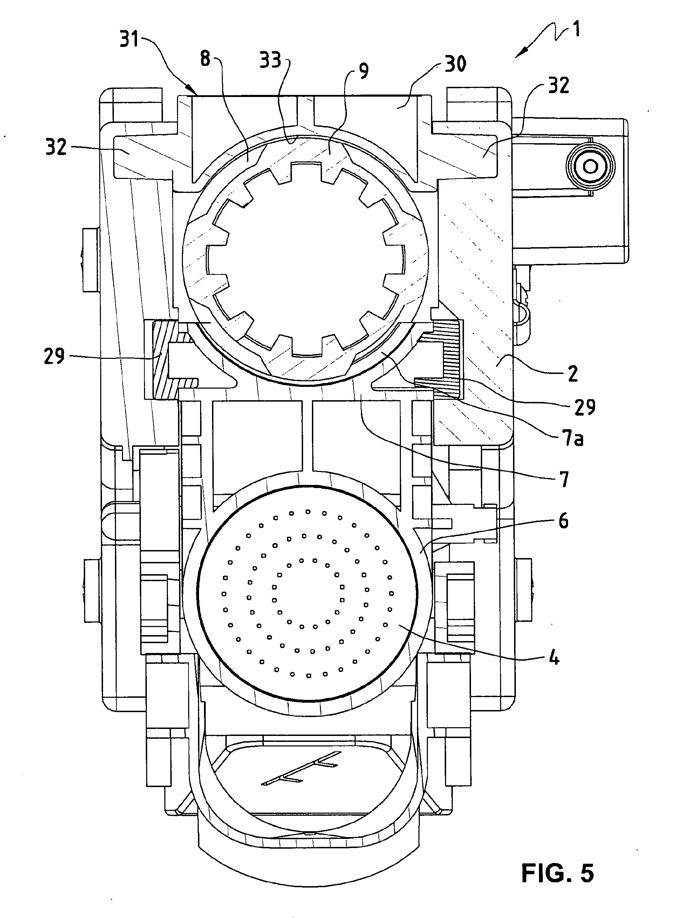

Aus Fig. 5 ist die im Rahmen 2 der Brüheinrichtung 1 angeordnete Spindel 9 ersichtlich, die mit dem trapezförmigen Gewinde 8 ausgestattet ist, in welches das korrespondierende Gewinde des Gewindeteils 7a des Mitnahmeteils 7 eingreift. Der Mitnahmeteil 7 ist im Rahmen mittels Längsführungen 29 in bekannter Weise längs verschiebbar parallel zur Achse der Spindel 9 geführt. Am Mitnahmeteil 7 ist der Brühzylinder 6 angebracht, in welchem der untere Kolben 4 angeordnet ist. Der Gewindeteil 7a des Mitnahmeteils 7 umfliesst die Spindel 9 im hier dargestellten Ausführungsbeispiel um etwa 120°, über diesen Bereich sind die beiden trapezförmigen Gewinde im Eingriff.

Auf der dem Gewindeteil 7a des Mitnahmeteils 7 gegenüber liegenden Bereich ist die Spindel 9 durch die Abstützmittel 31 gegen Ausbiegung vom Gewindeteil 7a weg abgestützt. Diese Abstützmittel 31 bestehen im Wesentlichen aus einer Platte 30, die sich quer über die Spindel 9 von einer Seitenwand zur anderen des Rahmens 2 erstreckt. Diese Platte 30 ist beidseitig mit Vorsprüngen 32 versehen, welche in entsprechend am Rahmen 2 angebrachte Ausnehmungen hinein ragen, wodurch die Platte 30 über diese Vorsprünge 32 im Rahmen 2 gehalten ist. Die Platte 30 ist mit einer Abstützfläche 33 versehen, die dem trapezförmigen Gewinde 8 der Spindel 9 zugewandt ist. Diese Abstützfläche 33 ist mit einer glatten zylindrischen Wölbung versehen, welche im Wesentlichen der Aussenfläche des trapezförmigen Gewindes 8 der Spindel 9 entspricht. Diese zylindrische Wölbung der Abstützfläche 33 umschliesst das trapezförmige Gewinde 8 der Spindel 9 um etwa einen Viertel des Umfangs der Spindel 9. Durch diese glatte zylindrische Wölbung der Abstützfläche 33 der Platte 30 wird die Spindel 9 in optimaler Weise an einer Ausbiegung vom Gewindeteil 7a weg gehindert.

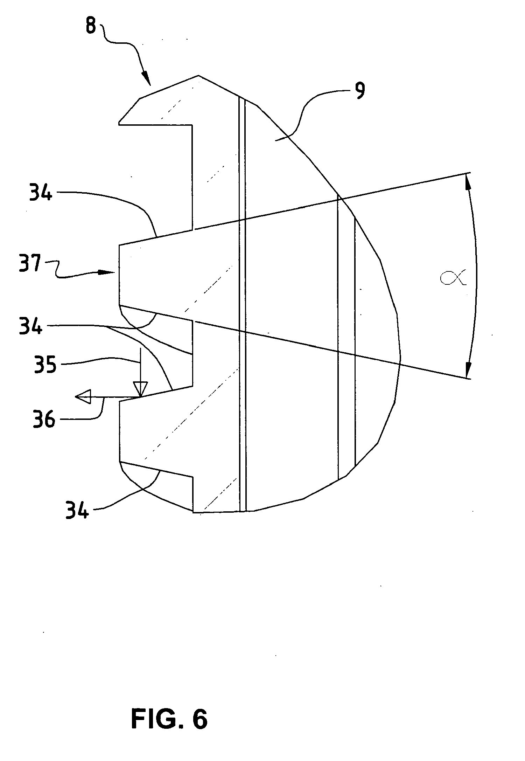

Aus Fig. 6 ist ein Teil des trapezförmigen Gewindes 8 der Spindel 9 vergrössert dargestellt. Die jeweils einander gegenüber liegenden Gewindeflächen 34 des trapezförmigen Gewindes 8 schliessen zwischen sich einen Winkel y ein, der im vorliegenden Ausführungsbeispiel 24° beträgt. Bei einer vertikalen Lastaufnahme durch die Gewindespindel 9, welche durch den Pfeil 35 dargestellt ist, ergibt sich aufgrund der Neigung der Gewindeflächen 34 eine horizontale Kraftkomponente, dargestellt durch Pfeil 36, die zur Folge hat, dass die Spindel bei der Aufnahme der Last, die beim Brühvorgang auf den unteren Kolben wirkt, eine Ausbiegung ausführen möchte, was durch die Abstützmittel 31 (Fig. 5), die die Aussenfläche 37 des trapezförmigen Gewindes 8 abstützt, verhindert wird. Dadurch wird verunmöglicht, dass der untere Kolben 4 während des Brühvorgangs, wie er in Fig. 2 dargestellt ist, durch das Ausbiegen der Spindel 9 sich nach unten vom oberen Kolben weg bewegen könnte.

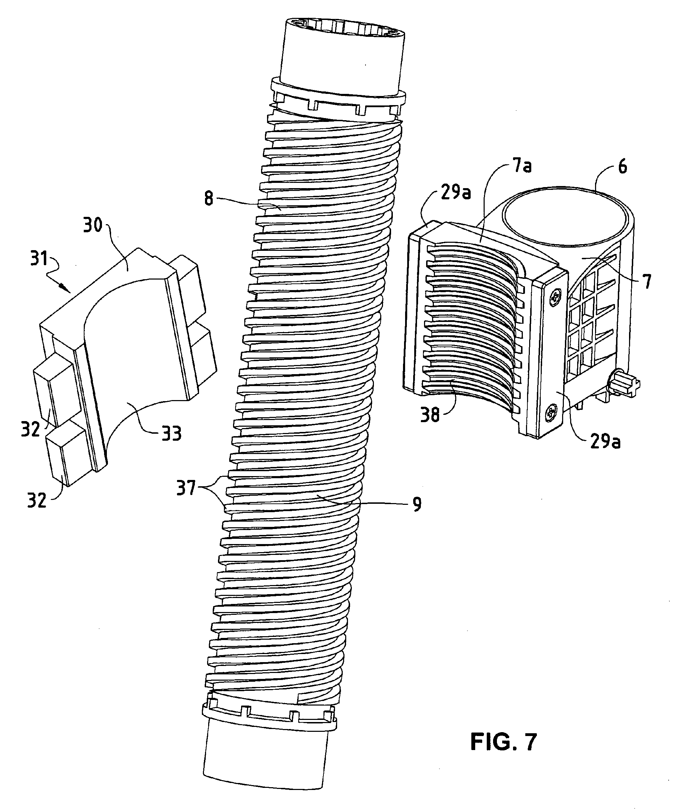

Fig. 7 zeigt die als Abstützmittel 31 wirkende Platte 30, die mit Vorsprüngen 32 versehen ist, welche, wie bereits erwähnt worden ist, im Rahmen der Brüheinrichtung gehalten sind. Diese Platte 30 weist die Abstützfläche 33 auf, die mit der glatten zylinderflächigen Wölbung versehen ist. Diese zylinderflächige Wölbung entspricht der Aussenfläche 37 des trapezförmigen Gewindes 8 der Spindel 9.

In Fig. 7 ebenfalls dargestellt ist der Brühzylinder 6, der mit dem Mitnahmeteil 7 versehen ist, an welchem der Gewindeteil 7a angebracht ist. Der Gewindeteil 7a ist ebenfalls mit einem trapezförmigen Gewinde 38 ausgestattet, welches dem trapezförmigen Gewinde 8 der Spindel 9 entspricht. Diese beiden trapezförmigen Gewinde 8 und 38 sind miteinander im Eingriff. Am Mitnahmeteil 7 sind Führungselemente 29a angebracht, mittels welchen der Brühzylinder 6 zusammen mit dem unteren Kolben im Rahmen 2 über die

Linearführungen 29 entlang der Spindel 9 längs verschiebbar geführt sind (Fig. 5).

Mit dieser Ausgestaltung der Erfindung wird in einfacher Weise vermieden, dass sich die Spindel unter axialer Belastung, welche beim Brühvorgang auftritt, ausbiegen kann, wodurch vermieden wird, dass während des Brühvorgangs sich der untere Kolben vom oberen Kolben entfernen kann, was eine Veränderung der zum Brühvorgang aufrecht erhaltenden Situation zur Folge haben würde.

## Patentansprüche

1. Brüheinrichtung für eine Kaffeemaschine, umfassend einen Brühzylinder (6) mit einer zylindrischen Bohrung und einen oberen Kolben (3) und einen unteren Kolben (4), durch welche der Brühzylinder (6) zur Bildung einer Brühkammer (12) abschliessbar ist, wobei der Brühzylinder (6) und die Kolben (3, 4) relativ zueinander verschiebbar in einem Rahmen (2) gehalten sind und über eine Antriebseinrichtung (9, 10) antreibbar sind, welche Antriebseinrichtung (9, 10) eine mit einem trapezförmigen Gewinde (8) versehene Spindel (9), deren beidseitigen Enden im Rahmen (2) drehbar gelagert sind, und einen Motor (10) umfasst, in welches trapezförmige Gewinde (8) der Spindel (9) einseitig ein Gewindeteil (7a) eingreift, welcher an einem am unteren Kolben (4) angebrachten Mitnahmeteil (7) angeordnet ist und entlang im Rahmen angebrachten Linearführungen (29) verschiebbar ist, eine Kaffeepulverzuführeinrichtung zum Befüllen der Brühkammer (12) mit Kaffeepulver, und ein Abstreifelement (19) zum Abstreifen des nach dem Brühvorgang aus der Brühkammer (12) durch den unteren Kolben (4) ausgestossenen Kaffeepulverkuchens (17) in einen Auffangbehälter (20), **dadurch gekennzeichnet, dass** die Spindel (9) auf der dem Gewindeteil (7a) gegenüberliegenden Bereich durch Abstützmittel (31) abgestützt ist, welche am Rahmen (2) befestigbar sind.

2. Brüheinrichtung nach Anspruch 1, **dadurch gekennzeichnet, dass** die Abstützmittel (31) aus einer Platte (30) gebildet sind, welche beidseitig am Rahmen (2) befestigt ist, und welche eine Abstützfläche (33) aufweist, die dem trapezförmigen Gewinde (8) der Spindel (9) zugewandt ist.

3. Brüheinrichtung nach Anspruch 2, **dadurch gekennzeichnet, dass** die Abstützfläche (33) mit einer glatten zylinderflächigen Wölbung versehen ist, welche im Wesentlichen der Aussenfläche (37) des trapezförmigen Gewindes (8) der Spindel (9) entspricht.

4. Brüheinrichtung nach Anspruch 3, **dadurch gekennzeichnet, dass** die glatte zylindrische Wölbung der Abstützfläche (33) die Aussenfläche (37) des trapezförmigen Gewindes (8) der Spindel (9) um etwa einen Viertel des Umfangs der Spindel (9) umschliesst.

5. Brüheinrichtung nach einem der Ansprüche 1 bis 4, **dadurch gekennzeichnet, dass** die Abstützmittel (31) aus einem widerstandsfähigem Kunststoff hergestellt sind.

6. Brüheinrichtung nach einem der Ansprüche 1 bis 5, **dadurch gekennzeichnet, dass** die Abstützmittel (31) derart am Rahmen (2) befestigt sind, dass diese bei durch den oberen Kolben (3) und den unteren Kolben (4) geschlossenen Brühkammer (12) gegenüberliegend zum Gewindeteil (7a) zu liegen kommt.

## Claims

1. Brewing device for a coffee machine, comprising a brewing cylinder (6) with a cylindrical bore and an upper piston (3) and a lower piston (4) by means of which the brewing cylinder (6) is able to be closed off to form a brewing chamber (12), the brewing cylinder (6) and the pistons (3, 4) being held in a frame (2) in a way displaceable relative to each other and being able to be driven via a drive device (9, 10), which drive device (9, 10) comprises a spindle (9) provided with a trapezoidal threading (8), the two ends of which are borne on both sides in a rotatable way in the frame (2), and a motor (10), in which trapezoidal threading (8) of the spindle (9) a threaded part (7a) engages on one side, which threaded part is disposed on a carrier (7) provided on the lower piston (4) and is displaceable in linear guides (29) provided in the frame, a ground coffee feed device for filling the brewing chamber (12) with ground coffee, and a stripping element (19) for stripping of the ground coffee cake (17), ejected from the brewing chamber (12) by the lower piston (4) after the brewing step, into a collection vessel (20), **characterised in that** the spindle (9) is supported in the region opposite the threaded part (7a) by support means (31), which are mountable on the frame (2).

2. Brewing device according to claim 1, **characterised in that** the support means (31) are formed by a plate (30), which plate is attached to the frame (2) on both sides, and which has a support surface (33) which is turned toward the trapezoidal threading (8) of the spindle (9).

3. Brewing device according to claim 2, **characterised in that** the support surface (33) is provided with a curve having a smooth cylindrical surface, which curve corresponds substantially to the outer surface (37) of the trapezoidal threading (8) of the spindle (9).

4. Brewing device according to claim 3, **characterised in that** the smooth cylindrical curve of the support surface (33) encompasses the outer surface (37) of the trapezoidal threading (8) of the spindle (9) by about one fourth of the circumference of the spindle (9).

5. Brewing device according to one of the claims 1 to 4, **characterised in that** the support means (31) are produced from a resistant plastic.

6. Brewing device according to one of the claims 1 to 5, **characterised in that** support means (31) are attached to the frame (2) in such a way that, with the brewing chamber (12) closed by the upper piston (3) and the lower piston (4), the support means come to be situated opposite the threaded part (7a).

## Revendications

1. Dispositif infuseur pour une machine à café, comprenant un cylindre infuseur (6) avec un perçage cylindrique et un piston supérieur (3) et un piston inférieur (4) qui permettent de fermer le cylindre infuseur (6) pour la formation d'une chambre d'infusion (12), le cylindre infuseur (6) et les pistons (3, 4) étant maintenus coulissants de manière relative entre eux dans un cadre (2) et pouvant être entraînés par un dispositif d'entraînement (9, 10), dispositif d'entraînement (9, 10) qui comprend une broche (9) munie d'un filet trapézoïdal (8) dont les deux extrémités sont logées dans le cadre (2), et un moteur (10), filet trapézoïdal (8) de la broche (9) dans lequel s'engage une partie de filet (7a) qui est disposée sur une partie d'entraînement (7) placée sur le piston inférieur (4) et qui est coulissante le long de guides linéaires (29) logés dans le cadre, comprenant un dispositif d'amenée de poudre à café pour le remplissage de la chambre d'infusion (12) de poudre de café et un élément de raclage (19) pour racler la galette de poudre de café (17) éjectée hors de la chambre d'infusion (12) par le piston inférieur (4) dans un récipient de collecte (20), **caractérisé en ce que** la broche (9) prend appui sur la zone opposée à la partie de filet (7a) par des moyens d'appui (31) qui peuvent être fixés sur le cadre (2).

2. Dispositif infuseur selon la revendication 1, **caractérisé en ce que** les moyens d'appui (31) se composent d'une plaque (30) qui est fixée des deux côtés sur le cadre (2) et qui présente une surface d'appui (33) qui est tournée vers le filet trapézoïdal (8) de la broche(9) d'environ un quart de la périphérie de la broche (9).

3. Dispositif infuseur selon la revendication 2, **caractérisé en ce que** la surface d'appui (33) est munie d'un bombement lisse cylindrique qui correspond sensiblement à la surface externe (37) du filet trapézoïdal (8) de la broche (9).

4. Dispositif infuseur selon la revendication 3, **caractérisé en ce que** le bombement cylindrique lisse de la surface d'appui (33) entoure la surface externe (37) du filet trapézoïdal (8) de la broche (9) d'au moins un quart de la périphérie de la broche (9).

5. Dispositif infuseur selon l'une des revendications 1 à 4, **caractérisé en ce que** les moyens d'appui (31) se composent d'une matière plastique résistante.

6. Dispositif infuseur selon l'une des revendications 1 à 5, **caractérisé en ce que** les moyens d'appui (31) sont fixés sur le cadre (2) de sorte qu'ils viennent prend appui en position opposée à la partie de filet (7a) quand la chambre d'infusion (12) est fermée par le piston supérieur (3) et le piston inférieur (4).
